# EUROPÄISCHE PATENTSCHRIFT

(11) **EP 1 314 907 B1**
(45) Veröffentlichungstag und Bekanntmachung des Hinweises auf die Patenterteilung: **15.07.2009**
(21) Anmeldenummer: 02025837.2
(22) Anmeldetag: 19.11.2002
(51) Int. Cl.: F16D 69/02, C04B 35/80, C04B 35/573

(54) **Reibkörper aus faserverstärkten Keramik-Verbundstoffen**
Fiber reinforced composite ceramic friction body
Corps de friction en matériau composite céramique renforcé par des fibres

(30) Priorität: 23.11.2001 DE 10157583
(43) Veröffentlichungstag der Anmeldung: 28.05.2003
(73) Patentinhaber: AUDI AG, 85045 Ingolstadt (DE)
(72) Erfinder: Bauer, Moritz, Dipl.Ing., 86153 Augsburg (DE); Kienzle, Andreas, Dr., 86672 Thierhaupten (DE); Zimmermann-Chopin, Rainer, Dr., 86679 Ellgau (DE); Heine, Michael, Dr., 86695 Allmannshofen (DE); Krätschmer, Ingrid, 86485 Biberbach (DE)
(74) Vertreter: Deckers, Hellmuth Alexander

(56) Entgegenhaltungen:
- EP-A- 1 211 231
- WO-A-02/26659
- WO-A-99/41069
- FR-A- 2 781 852
- US-A- 6 042 935

## Beschreibung

Die Erfindung bezieht sich auf Reibkörper aus faserverstärkten Keramik-Verbundwerkstoffen. Insbesondere bezieht sich die Erfindung auf Werkstoffe für Reibkörper und ein Herstellungsverfahren von Reibkörpern, insbesondere für Reibbeläge, Kupplungsscheiben oder Bremsscheiben, wobei die Keramik-Verbundwerkstoffe insbesondere mit Kohlenstofffasern verstärkte keramische Materialien umfassen, speziell kurz- und langfaserverstärktes C/SiC - Kernmaterial (mit Kohlenstofffasern verstärkte Materialien, deren Matrix Siliciumcarbid enthält) und keramisches Reibmaterial aus überwiegend Si- und SiC-Phasen.

Seit langem bekannt ist es, für Reibbeläge von Kupplungen Mineralfaserstoffe zu verwenden. Technologisch besonders gut geeignet sind hierfür Asbestwerkstoffe. Der Einsatz dieser asbesthaltigen Materialien ist heutzutage jedoch ökologisch nicht mehr vertretbar, so dass nahezu ausschließlich Werkstoffe auf Basis anderer Mineralfasern zum Einsatz kommen. Aufgrund der im Zusammenhang mit gestiegenen Motorleistungen, Fahrzeuggeschwindigkeiten und Fahrzeuggewichten stehenden gestiegenen Anforderungen an die tribologischen Eigenschaften von Kupplungsscheiben im KFZ-Bereich werden zunehmend auch neue Werkstoffpaarungen erprobt.

Von besonderem Interesse sind hierbei mit Kohlenstofffasern verstärkte Verbundwerkstoffe oder Keramiken, insbesondere mit SiC-haltiger Matrix. Diese Werkstoffe zeichnen sich durch hohe Temperaturbeständigkeit, geringen Verschleiß und zum Teil gute tribologischen Eigenschaften aus. In der DE-A 199 39 545 wird vorgeschlagen, zur Erhöhung der Belastbarkeit und Leistungsfähigkeit gegenüber dem Stand der Technik Kupplungsscheiben mit Reibbelägen aus mit Kohlenstofffasern verstärktem Siliziumcarbid (SiC) zu verwenden. Nachteilig ist hierbei, dass die Herstellung einer dichten SiC-Matrix mit einer Faserverstärkung aus Kohlenstofffasern technisch nur aufwendig zu realisieren ist. Demgegenüber ist ein technischer Fortschritt der Materialsynthese die Siliziumflüssiginfiltration von mit Kohlenstofffasern verstärkten kohlenstoffhaltigen Vorkörpern, wobei im allgemeinen mit Kohlenstofffasern verstärkte Verbundwerkstoffe mit Si- und SiC-Matrix entstehen. Aus der DE-C 44 38 455 ist bekannt, Reibeinheiten, insbesondere Brems- und Kupplungskörper aus mit Kohlenstofffasern verstärktem Si/SiC durch Siliziuminfiltration von mit Hohlräumen und Ausnehmungen versehenen porösen, mit Kohlenstofffasern verstärkten Kohlenstoffkörpern (CFC-Körpern) zu erzeugen. Das Verfahren führt insbesondere zu innenbelüfteten Reibscheiben aus C/SiC (oder, bei nicht vollständiger Umsetzung des Kohlenstoffs in der Matrix, C/C-SiC). Dabei wird durch die Verbindung verschiedener CFC-Körper die Möglichkeit zur Ausbildung von komplexen Geometrien eines Reibkörpers gegeben. Durch die Ausnehmungen und Hohlräume wird jedoch die Festigkeit des Körpers vermindert, dies ist insbesondere bei den für Kupplungsscheiben hohen Scheiben-Rotationsgeschwindigkeiten oder Drehzahlen nachteilig.

In der DE-A 198 34 704 wird ein mehrschichtiger Aufbau einer CFC-Reibscheibe vorgeschlagen, aus einem Tragekörper aus Kohlenstofffaser-Gewebe und einem Verschleißkörper oder einer Verschleißschicht enthaltend Kohlenstoff-Kurzfasern. Bei diesem Aufbau ist die Festigkeit in radialer Richtung erhöht, und die günstigen Reibeigenschaften von kurzfaserverstärktem CFC an der Oberfläche werden genutzt. Für den weiteren Prozess der Flüssigsilicierung zur Herstellung von C/SiC-Werkstoffen ist jedoch der hohe Unterschied in den thermophysikalischen Eigenschaften zwischen Kurz- und Langfaserbereichen ungünstig. Der Kraftschluss an der Grenzfläche zwischen dem Langfaserbereich mit Orientierung der Fasern in der Scheibenebene und dem Kurzfaserbereich mit isotroper Faserorientierung ist für viele Anwendungen ebenfalls zu gering. Dies gilt insbesondere für den Fall, dass Tragekörper und Reibfläche stark unterschiedliche thermophysikalische Eigenschaften aufweisen.

In der DE-A 197 21 473 wird ebenfalls ein mehrschichtiger Aufbau einer Reibscheibe aus einem mit Kohlenstoff-Fasern verstärkten keramisierten Verbundwerkstoff beschrieben. Der überwiegende Teil der Kohlenstoffasern, zumindest im Reibbereich, soll möglichst parallel zur Flächennormalen der Reibfläche ausgerichtet sein, um die Wärmeabfuhr aus der Reibfläche ins Innere der Reibeinheit zu verbessern.

Aufgabe der Erfindung ist es daher, gegenüber diesem Stand der Technik eine Verbesserung der Festigkeit von faserverstärkten Reibkörpern, insbesondere C/SiC-Reibscheiben, gegenüber rotierender Beanspruchung, insbesondere bei hohen Drehzahlen, zu erreichen, wobei gleichzeitig der Kraftschluss zwischen Reibzone und Tragzone verbessert werden soll. Weiter soll die Reibfläche hinsichtlich der Reib- und Verschleißeigenschaften optimiert werden, und die Reibkörper sollen mit dem technisch und ökonomisch effizienten Flüssigsilicierverfahren herstellbar sein.

Die Aufgabe wird gelöst durch die Bereitstellung eines Reibkörpers, insbesondere einer C/SiC-Reibscheibe, dessen Kernzone oder Tragzone aus kurzfaserverstärktem C/SiC mit Langfaserbereichen, insbesondere in Form von Gewebelagen, -bändern, oder -streifen besteht. Während die Kurzfasern in überwiegend isotroper Ausrichtung vorliegen, besitzen die Langfasern Vorzugsrichtungen, insbesondere in Form von zweidimensionalen Netz- oder Tragwerken, welche durch die Matrix aus kurzfaserverstärktem C/SiC umhüllt beziehungsweise durchsetzt werden. Die Reibfläche besteht aus einer Verbundkeramik, die mit dem kurzfaserverstärkten C/SiC der Tragzone artverwandt ist.

Die Erfindung betrifft daher einen Reibkörper aus mit Fasern verstärkten keramischen Werkstoffen, umfassend eine Kern- oder Tragzone und mindestens eine Reibschicht, wobei die Kernzone Fasern in Form von Langfaserbündeln, Geweben, Gewirken, Vliesen oder Gelegen enthält, sowie Fasern in Form von Kurzfasern, und wobei die Reibschicht einen Massenanteil von weniger als 10 %, bevorzugt weniger als 5 %, und besonders bevorzugt maximal 2 % von Langfasern, und bis zu 35 % an Kurzfasern enthält, wobei die Langfasern in der Kernzone zu mindestens 70 %, bevorzugt zu mindestens 80 %, und insbesondere zu mindestens 85 % in der Ebene des Reibkörpers orientiert sind, und die Orientierung der Kurzfasern in der Kernzone im wesentlichen isotrop ist.

Unter "im wesentlichen isotrop" wird eine derartige Orientierung verstanden, bei welcher höchstens 30 % der Fasern eine gemeinsame Vorzugsrichtung aufweisen.

Erfindungsgemäß erfolgt die geometrische Ausrichtung der die Langfaserverstärkung der Kernzone bildenden Fasern derart, dass sich eine für rotierende Beanspruchung optimale Festigkeitsverteilung einstellt, insbesondere mit hohen Anteilen in Umfangsrichtung. Durch die in Umfangsrichtung und parallel zu Sekanten ausgerichteten und sich teils überlappenden Langfasern, die insbesondere in Form von Gewebebändern oder -streifen eingesetzt werden, wird die Bauteilfestigkeit gegenüber der Rotationsbelastung, ausgedrückt als maximale Drehzahl ohne Versagen, deutlich verbessert.

Bevorzugt werden als Verstärkungsfasern Kohlenstofffasern und/oder Graphitfasern eingesetzt. Die Matrix der Tragzone enthält bevorzugt Phasen aus Siliziumcarbid, sowie zusätzlich Phasen, die metallisches Silizium, gegebenenfalls legiert mit anderen Metallen, und gegebenenfalls Phasen, die elementaren Kohlenstoff und/oder Carbide von Elementen außer Silizium, enthalten.

Ein weiterer Aspekt der Erfindung ist die Zusammensetzung der Reibfläche oder Reibschicht aus einer Verbundkeramik, die mit dem Kurzfasermaterial der Kernzone artverwandt ist, und die insbesondere einen hohen Anteil an Si- und SiC-Phasen aufweist. Hierdurch wird die Verschleißfestigkeit und der Reibwert der Reibfläche verbessert, bei - wegen ihrer ähnlichen thermischen Ausdehnung - ungeschwächter Bindung an die Tragzone des Reibkörpers.

Ein weiterer Aspekt ist die Verwendung des erfindungsgemäßen Verbundwerkstoffes als Reibelement oder Reibscheibe von Kupplungsscheiben sowie Bremsscheiben in Fahrzeugen.

Der Werkstoffverbund aus langfaserverstärkter C/SiC-Kernzone und C/SiC-Reibschicht des erfindungsgemäßen Reibkörpers wird vorteilhafter weise durch eine Flüssiginfiltration von faserverstärkten oder faserbündelverstärkten kohlenstoffhaltigen Vorkörpern mit Siliziumschmelzen hergestellt. Derlei Verfahren sind beispielsweise aus der DE-A 198 56 721, DE-C 197 11 829 oder der DE-A 197 10 105 bekannt.

Erfindungsgemäß besitzt der Reibkörper im Kernbereich eine Faserverstärkung sowohl aus Kurzfasern wie auch aus Langfasern, so dass die Faserlängenverteilung durch mindestens zwei deutlich voneinander getrennte Fraktionen gekennzeichnet ist. Im folgenden sind unter Fasern sowohl Kurz- wie Langfasern, sowie auch insbesondere mit Polymeren oder carbonisierbaren Stoffen und/oder deren Pyrolyseprodukten beschichtete Fasern zu verstehen. Als Fasern werden bevorzugt kohlenstoffhaltige Fasern, besonders bevorzugt Kohlenstoff- oder Graphitfasern, und Fasern enthaltende Verbindungen mindestens zwei der Elemente Si, C, B, Ti, oder N untereinander verwendet.

Die Kurzfasern der Kernzone des Reibkörpers aus C/SiC sind bevorzugt in Bündeln oder Agglomeraten mit kohlenstoffhaltiger Matrix zusammengefasst. Unter Kurzfasern sind hier und im folgenden auch Kurzfaserbündel zu verstehen. Die Kurzfasern sind im wesentlichen isotrop, das heißt insbesondere ohne radiale Vorzugsrichtung, orientiert. Die Längenverteilung der Kurzfasern liegt typischerweise im Bereich von 0,001 bis 30 mm, bevorzugt bei 0,1 bis 15 mm und besonders bevorzugt bei 0,2 bis 5 mm.

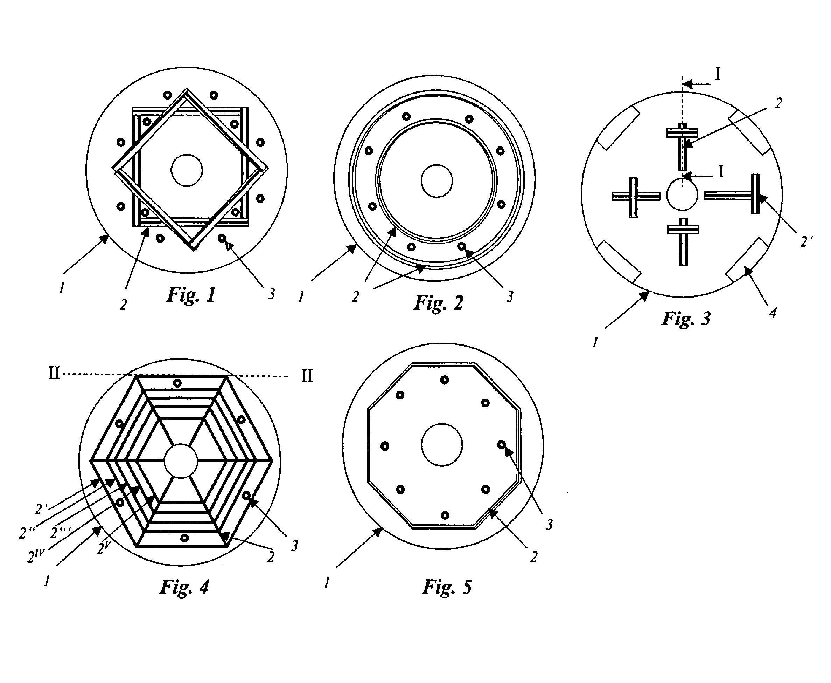

Im Gegensatz hierzu zeigen die Langfasern der Kernzone des Reibkörpers eine Vorzugsorientierung, insbesondere in Form eines zweidimensionalen, parallel zur Scheibenebene ausgerichteten Tragwerkes. Die Langfasern des Kernbereiches sind üblicherweise in Bündeln, Stäben, Gelegen, Geweben oder Gestricken zusammengefasst und werden im folgenden gemeinsam als Langfaserbündel bezeichnet. Besonders bevorzugt werden hier als Ausgangsmaterial mit C-Fasern verstärkte Kunststoffe (CFK), oder mit C-Fasern verstärkte Kohlenstoff-Werkstoffe (CFC), wobei die C-Fasern als Gewebebündel oder Bänder vorliegen, eingesetzt. Auch Prepregbänder oder CFK-Stäbe aus pultrudierten Fasern können zum Einsatz gelangen. Die Langfaserbündel in dem erfindungsgemäßen Reibkörper besitzen eine Vorzugsorientierung, insbesondere bei scheiben- oder kreisringförmigen Reibkörpern in Umfangsrichtung, radial und/oder parallel zu Sekanten. Typischerweise werden mehrere Langfaserbündel geregelt zueinander ausgerichtet, insbesondere rotationssymmetrisch um die Drehachse bei kreisring- oder scheibenförmigen Reibkörpern. Besonders bevorzugt sind zentrosymmetrische Formen, Sternformen oder spinnennetzförmige Anordnungen. Dabei ist es vorteilhaft, dass sich verschiedene Langfaserbündel kreuzen, oder Knotenpunkte ergeben. Durch die Knotenpunkte ist es insbesondere möglich, die einzelnen Langfaserbündel zu fixieren und ein stabiles Tragwerk zu bilden, das beim späteren Formgebungsprozess des Reibkörpers nicht mehr deformiert wird. Eine Auswahl typischer geometrischer Ausgestaltungen bei kreisring- bzw. scheibenförmigen Reibkörpern gemäß der Erfindung sind in den Abbildungen Fig. 1 bis Fig. 7 aufgeführt.

### Dabei zeigen

- Fig. 1: eine Draufsicht auf einen Schnitt parallel zu den Reibflächen durch einen kreisringförmigen Reibkörper, mit in Richtung von Sekanten liegenden Langfaserbündeln,
- Fig. 2: eine Draufsicht auf einen Schnitt parallel zu den Reibflächen durch einen kreisringförmigen Reibkörper, mit 2 kreisförmig verlaufenden in sich geschlossenen Langfaserbündeln,
- Fig. 3: eine Draufsicht auf einen Schnitt parallel zu den Reibflächen durch einen kreisringförmigen Reibkörper, mit 4 radial verlaufenden Langfaserbündeln, an die jeweils ein weiteres Langfaserbündel in einem Winkel von ca. 90 ° angeschlossen ist,
- Fig. 4: eine Draufsicht auf einen Schnitt parallel zu den Reibflächen durch einen kreisringförmigen Reibkörper, mit einer spinnennetzförmigen Anordnung der Langfaserbündel,
- Fig. 5: eine Draufsicht auf einen Schnitt parallel zu den Reibflächen durch einen kreisringförmigen Reibkörper, mit einer Pentagramm-förmigen Anordnung von Langfaserbündeln,
- Fig. 6: einen Schnitt parallel zur Drehachse eines kreisringförmigen Reibkörpers durch eine Anordnung gemäß der in Fig. 3 dargestellten längs der Linie I I, wobei in dieser Abbildung nur die Kernzone gezeigt ist, und
- Fig. 7: einen Schnitt parallel zur Drehachse eines kreisringförmigen Reibkörpers durch eine Anordnung gemäß der in Fig. 4 dargestellten, längs der Linie II II, wobei in dieser Abbildung auf beiden Seiten der Kernzone eine Reibzone ausgeführt ist.

Im einzelnen zeigt die Fig. 1 eine Draufsicht auf einen Schnitt parallel zur Boden- oder Deckfläche eines kreisringförmigen Reibkörpers **1**, in der übereinander in zwei aneinandergrenzenden Lagen jeweils vier Langfaserbündel **2** in Sekantenrichtung in der Kern- oder Tragzone des Reibkörpers angeordnet sind. Die vier Langfaserbündel der ersten Lage sind gegenüber den vier Langfaserbündeln der folgenden Lage durch Drehung um 45 ° um die Achse des Reibkörpers versetzt. Der scheibenförmige Reibkörper weist zusätzlich Bohrungen **3** mit kreisförmigem Querschnitt auf, die einen Durchgang zwischen Boden- und Deckfläche bilden. Diese Bohrungen können parallel oder in einem Winkel von bis zu 45 ° geneigt zur Drehachse verlaufen.

Die Fig. 2 zeigt eine Draufsicht auf einen Schnitt parallel zu den Reibflächen durch einen scheibenförmigen Reibkörper **1,** mit 2 kreisförmig angeordneten Langfaserbündeln **2**. Die Reibscheibe weist zusätzlich Bohrungen **3** mit kreisförmigem Querschnitt auf, die einen Durchgang zwischen Boden- und Deckfläche bilden. Diese Bohrungen können parallel oder in einem Winkel von bis zu 45 ° geneigt zur Drehachse der Reibscheibe verlaufen.

Die Fig. 3 zeigt eine Draufsicht auf einen Schnitt parallel zu den Reibflächen durch einen scheibenförmigen Reibkörper **1**, mit vier in radialer Richtung liegenden Langfaserbündeln **2**, jeweils in einem Winkel von 90 ° zueinander, wobei an diese jeweils in einem Winkel von 90 ° zu dem radialen Langfaserbündel **2** ein kürzeres Langfaserbündel **2'** angeordnet ist. Dabei können diese in Sekantenrichtung angeordneten Langfaserbündel **2'** in unterschiedlicher Entfernung von der Drehachse der Reibscheibe angeordnet sein, wie dargestellt (bei der Stellung "3" eines gedachten Zifferblatts einer Uhr) entweder an dem der Peripherie nahen Ende, oder zum Zentrum der Reibscheibe hin verschoben (entgegen dem Uhrzeigersinn in der Fig. 3 in den Stellungen "12", "9" und "6" dargestellt). Symmetrisch über die Peripherie verteilt sind hier Ausnehmungen **4** in der Tragzone, die das Trägheitsmoment der Scheibe verkleinern und damit zu höherer Drehzahl vor Versagen der Scheibe führen.

Die Fig. 4 zeigt eine Draufsicht auf einen Schnitt parallel zu den Reibflächen durch einen scheibenförmigen Reibkörper **1,** mit Langfaserbündeln **2,** und **2'** bis **2^{V},** die in der Art eines sechsstrahligen Spinnennetzes angeordnet sind. Dabei verlaufen Langfaserbündel **2** in radialer Richtung, und jedes der durch diese radialen Langfaserbündel abgeteilten Segmente enthält in Sekantenrichtung orientierte parallele Langfaserbündel **2', 2", 2^{III}, 2^{IV}** und **2^{V}**, die in der gezeigten Ausführungsform jeweils zwei benachbarte radiale Langfaserbündel **2** mit ihren Enden berühren. Die Reibscheibe weist zusätzlich Bohrungen **3** mit kreisförmigem Querschnitt auf, die einen Durchgang zwischen Boden- und Deckfläche bilden. Diese Bohrungen können parallel oder in einem Winkel von bis zu 45 ° geneigt zur Drehachse der Reibscheibe verlaufen.

Die Fig. 5 zeigt eine Draufsicht auf einen Schnitt parallel zu den Reibflächen durch einen scheibenförmigen Reibkörper mit Langfaserbündeln **2,** die in Form eines fünfzackigen Sternes (Pentagramms) angeordnet sind, wobei sich die Enden der Langfaserbündel **2** an jeder der Spitzen berühren. Die Reibscheibe weist zusätzlich Bohrungen **3** mit kreisförmigem Querschnitt auf, die einen Durchgang zwischen Boden- und Deckfläche bilden. Diese Bohrungen können parallel oder in einem Winkel von bis zu 45 ° geneigt zur Drehachse der Reibscheibe verlaufen.

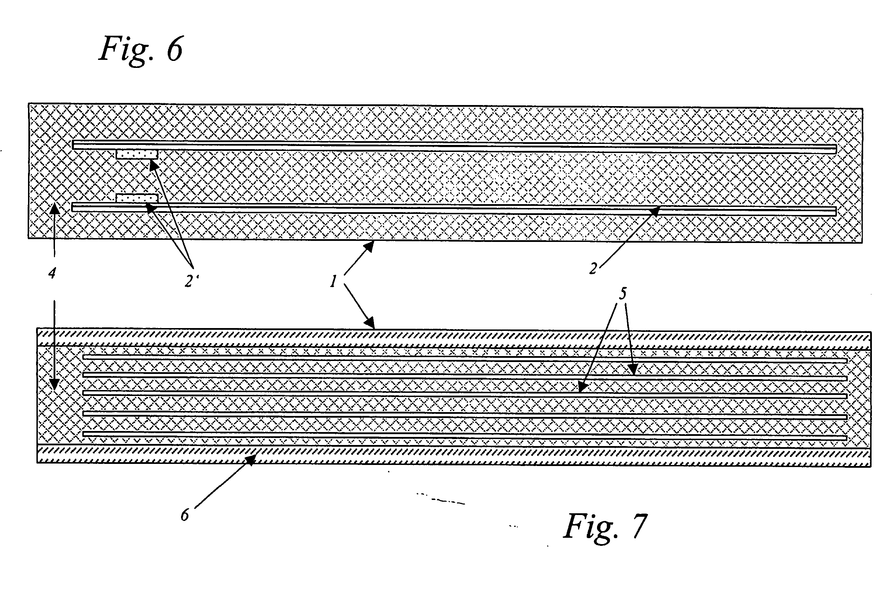

Die Fig. 6 zeigt einen Schnitt durch einen scheibenförmigen Reibkörper **1** entlang der Linie I I, wobei hier lediglich die Kern- oder Tragzone dargestellt ist. In der Matrix **4** sind die Langfaserbündel **2** in radialer Richtung und die Langfaserbündel **2'** in Richtung parallel zur Sekante eingebettet.

Die Fig. 7 schließlich zeigt eine Ausführungsform eines scheibenförmigen Reibkörpers **1**, in der Langfaserbündel **5** in mehreren parallelen Lagen übereinander in der Matrix **4** angeordnet sind. Auf der Trag- oder Kernzone sind auf beiden Deckflächen Reibschichten **6** angebracht, die ausschließlich Kurzfasern als Verstärkungsmittel enthalten.

Die Länge der Langfasern und der Langfaserbündel übersteigt diejenige der Kurzfasern deutlich. Die Länge, ausgedrückt im Verhältnis zum Reibscheibendurchmesser ***d***, liegt typischerweise im Bereich von 10 % bis nahezu 100 % von ***d***; für die die radiale Richtung typischerweise von 10 % bis 50 % von ***d*** , für die bevorzugte Ausrichtung parallel zu Sekanten von 10 bis 80 % von ***d***und für die besonders bevorzugte Ausrichtung in Umfangsrichtung 10% bis 100% des Scheibenumfanges. Die Länge liegt jedoch mindestens bei 50 mm. Die Breite der Langfaserbündel liegt typischerweise bei. mindestens 0,5 mm, bevorzugt mindestens 2 mm und besonders bevorzugt mindestens 4 mm. Die Dicke liegt im allgemeinen unterhalb von 20 % der Scheibendicke, bevorzugt bei 0,05 bis 3 mm und besonders bevorzugt bei 0,1 bis 1 mm. Dabei ergibt sich im Querschnitt bevorzugt eine ovale, oder besonders bevorzugt eine flache Form. Die Breite, Dicke und Konditionierung (Vorbehandlung, insbesondere Beschichtung bzw. Tränkung) der Langfaserbündel, Gewebe oder Gestricke sind so gewählt, dass durch die Flüssigsilicierung eine Umwandlung des Kohlenstoffs der Fasern zu Siliziumcarbid nur in möglichst geringem Maß erfolgt. Hierdurch bleiben auch nach der Silicierung durchgängige Langfaserbündel erhalten, die zur erforderlichen Festigkeitssteigerung der Scheibe führen.

Ein besonderer Vorteil der Erfindung ist, dass die Menge und Anordnung der Faserbündel eine dreidimensionale Durchdringung des Reibkörpers mit der Phase aus kurzfaserverstärktem C/SiC zulässt. Hierdurch wird eine kontinuierliche Phase aus kurzfaserverstärktem C/SiC gebildet. Die Menge der kurzfaserverstärkten C/SiC-Phase innerhalb der Kernzone liegt dabei üblicherweise bei über 10 Vol%, bevorzugt bei über 30 Vol% und besonders bevorzugt bei über 40 Vol%.
Im Gegensatz zu dem aus dem Stand der Technik bekannten Aufbau der Kernzone aus durchgehenden Gewebematten, Prepreglagen, Vliesen und dergleichen weist die erfindungsgemäße Ausführung senkrecht zur Scheibenebene eine durchgehende kurzfaserverstärkte C/SiC-Phase auf. Die Langfaserbündel werden nahezu vollständig von der Phase aus kurzfaserverstärktem C/SiC umhüllt. Hierdurch ergibt sich eine sehr vorteilhafte Nutzung des Verstärkungseffektes und der Festigkeitsverteilung des Reibkörpers.

Ein weiterer Aspekt der Erfindung ist die Möglichkeit, gezielte Verstärkungen einzubringen, insbesondere bei Verwendung als Reib- oder Kupplungsscheibe an Stellen der Krafteinleitung in diese. Typische Stellen sind Befestigungsbohrungen und Nuten der Mitnehmerscheibe, oder Befestigungsbohrungen für die Topfanbindung bei Scheibenbremsen. Gegenüber unstrukturierten Gewebelagen kann die Langfaserverstärkung, insbesondere in Form von stabilen Einlegeteilen, so angebracht werden, dass beim Anbringen von Bohrungen oder Nuten im CFC-Vorkörper oder der silicierten Scheibe keine Verletzung der Langfaserlagen auftritt. Dazu werden Aussparungen in den Gewebeteilen oder Gestricketeilen vorgesehen an den Stellen, an denen später Bohrungen eingebracht werden sollen.

Erfindungsgemäß unterscheidet sich die Reibschicht bzw. der Reibbelag des Reibkörpers vom Aufbau des Kernbereiches durch einen verringerten Fasergehalt, beziehungsweise einen höheren Anteil an Si- und SiC-Phasen. Vorteilhafterweise sind auch die mittleren Faserlängen der Reibschicht geringer als die der übrigen Kurzfasern. Üblicherweise liegt der Massenanteil an SiC-Phasen über 40 % und der Massenanteil an Si-Phasen unterhalb von 35 %, jeweils bezogen auf die Masse des Verbundwerkstoffs. Bevorzugt wird eine Zusammensetzung mit einem Massenanteil an SiC-Phasen von über 70 % und besonders bevorzugt von 80 bis 99 %. Der Massenanteil an Fasern liegt damit üblicherweise unterhalb von 35 %. Die Dicke der Reibschicht ist typischerweise mindestens 0,1 mm, bevorzugt mindestens 0,5 mm und besonders bevorzugt mindestens 1 mm.

Zur Herstellung von Reibkörpern gemäß der Erfindung, die Siliciumcarbid-haltige Matrices umfassen, werden zunächst kohlenstoffhaltige poröse Grünkörper hergestellt. Dabei werden die Langfaserbündel üblicherweise mittig zwischen Schichten aus Kurzfaser- bzw. Kurzfaserbündelhaltiger Grünkörper-Mischung in eine Pressform eingelegt. Werden mehrere Verstärkungsebenen innerhalb der Scheibe verwendet, so werden die einzelnen Lagen aus Langfaserbündeln durch eine Lage der Grünkörpermischung voneinander getrennt. Vorteilhafterweise werden die einzelnen Langfaserbündel zunächst zu einem stabilen zweidimensionalen Tragwerk zusammengefügt. Die Bündel werden hierzu an den Knotenpunkten, bevorzugt mit pyrolysierbaren organischen Polymeren, zusammengeklebt. Das Tragwerk wird dann in bekannter Weise als Einlegeteil zwischen Schichten aus Kurzfaser- bzw. Kurzfaserbündel-verstärkter Grünkörper-Mischung eingebracht. Die Grünkörpermischung enthält neben den Kurzfasern- oder Faserbündeln gegebenenfalls auch Füllstoffe, sowie härtbare und carbonisierbare Harze und/oder Peche. Hierauf wird die Grünkörper-Mischung mit der Langfaserbündel-Verstärkung verpresst und bei erhöhten Temperaturen ausgehärtet, üblicherweise zwischen 120 und 300 °C. Ebenso ist es aber auch möglich, die Formgebung durch andere aus der Faserverbundwerkstofftechnologie bekannte Verfahren, wie zum Beispiel RTM ("reaction transfer moulding"), vorzunehmen. In einer weiteren vorteilhaften Ausgestaltung der Erfindung wird das zur Verstärkung vorgesehene Tragwerk aus Fasern gewebt oder gestrickt. Durch den Formgebungsprozess, beispielsweise beim Zusammenpressen der Grünkörper-Mischung, oder der Harzinjektion beim RTM-Verfahren kann eine gewisse Texturierung des Kurzfaseranteils auftreten. Dies kann dazu führen, dass die Fasern und Faserbündel vermehrt in der Ebene des Reibkörpers ausgerichtet sind. Da sich diese Anordnung signifikant von der Vorzugsorientierung der Langfaserbündel unterscheidet, wird auch diese Anordnung im folgenden als isotrop bezeichnet.

Der der späteren Reibschicht entsprechende Grünkörper, welcher zusammen mit dem Kernkörper verpresst oder auch separat gefertigt und danach aufgeklebt werden kann, muss einen dem gewünschten späteren SiC-Gehalt angemessenen Kohlenstoffgehalt aufweisen. Der als Reaktionspartner des flüssigen Siliziums bei der nachfolgenden Flüssigsilicierung auftretende Kohlenstoff geht aus kohlenstoffhaltigen Füllstoffen, typischerweise Graphit, Pyrolyserückständen von Harzen und Pechen und reaktiven Kurzfaserbündeln hervor. Für die Grünkörper-Mischung der Reibschicht kann dabei vollständig auf faserförmiges Material verzichtet werden. Hierdurch kann nach der Silicierung auch eine vollständig faserfreie Reibschicht hergestellt werden.

Die durch Pressen und Härten hergestellten Grünkörper werden durch Carbonisierung bei ca. 750 bis ca. 1100 °C unter Schutzgas oder im Vakuum oder Graphitierung (bei Temperaturen oberhalb von ca. 1800 °C) zu einem CFC-Körper umgesetzt. Darauf wird der CFC-Körper bei Temperaturen oberhalb von 1420 °C durch Infiltration mit einer Siliziumschmelze, die auch weitere Metalle oder Halbmetalle in Massenanteilen von bis zu 50 % aufweisen kann, siliciert. Dabei wandelt sich in bekannter Weise zumindest ein Teil des Kohlenstoffs durch chemische Reaktion in SiC um. Werden weitere Metalle verwendet, so bilden sich Siund SiC-Phasen neben Mischphasen aus Silizium und den eingesetzten Metallen und Phasen aus Metallcarbiden und/oder Metallsiliciden aus. Dies bedeutet, dass die Metalle oder Halbmetalle der Matrix im Si oder SiC gelöst, als Si-Legierung, als Ausscheidung im Si oder SiC, als diskrete Si-Verbindung, oder weitgehend separate Phase auftreten können.

Typischerweise werden diese Metalle-, oder Halbmetalle bei der Flüssigsilicierung als Legierungsbestandteile des Siliziums in den Verbundwerkstoff eingebracht und reichern sich in den Siliziumphasen des Werkstoffes an. Zu den bevorzugten Metallen zählen insbesondere Mo, Ni, Cr, Ti, Fe, Cu, Al und B.

### Bezugszeichenliste

- 1: Reibkörper
- 2,2',2",2^{III},2^{IV,}2^{V}: Langfaserbündel
- 3: Bohrungen
- 4: Ausnehmungen
- 5: Langfaserbündel
- 6: Reibschichten

## Patentansprüche

1. Reibkörper aus mit Fasern verstärkten keramischen Werkstoffen, umfassend eine Kern- oder Tragzone und mindestens eine Reibschicht, **dadurch gekennzeichnet, dass** die Kernzone Verstärkungsfasern in Form von Langfaserbündeln, Geweben, Gewirken, Vliesen oder Gelegen enthält, sowie Verstärkungsfasern in Form von Kurzfasern, und dass die Reibschicht einen Massenanteil von weniger als 10 % von Langfasern und bis zu 35 % an Kurzfasern enthält, dass die Langfasern in der Kernzone zu mindestens 70 % in der Ebene des Reibkörpers orientiert sind, und dass die Orientierung der Kurzfasern in der Kernzone im wesentlichen isotrop ist, wobei dies bedeutet, dass höchstens 30 % der Fasern eine gemeinsame Vorzugsrichtung aufweisen, und wobei die Langfasern der Kernzone mindestens 50 mm lang, und die Kurzfasern der Kernzone höchstens 30 mm lang sind.

2. Reibkörper nach Anspruch 1, **dadurch gekennzeichnet, dass** die Kernzone ein faserverstärkter keramischer Verbundwerkstoff mit Si- und SiC-haltiger Matrix ist.

3. Reibkörper nach Anspruch 1, **dadurch gekennzeichnet, dass** die Verstärkungsfasern Kohlenstofffasern und/oder Graphitfasern und/oder Fasern enthaltend Verbindungen von mindestens zwei der Elemente Si, C, B, Ti und N sind.

4. Reibkörper nach Anspruch 1, **dadurch gekennzeichnet, dass** der Massenanteil an SiC-Phasen in der Reibschicht mindestens 40 % und der Massenanteil an Si-Phasen höchstens 35 % beträgt.

5. Reibkörper nach einem der vorangegangenen Ansprüche, **dadurch gekennzeichnet, dass** der Reibkörper die Form einer Scheibe hat.

6. Reibkörper nach einem der vorangegangenen Anspruch, **dadurch gekennzeichnet, dass** die Langfasern in Bündeln, Gelegen, Geweben oder Gestricken mit einer Breite von mindestens 0,5 mm und einer Dicke von mindestens 0,05 mm zusammengefasst sind.

7. Reibkörper nach einem der vorangegangenen Ansprüche, **dadurch gekennzeichnet, dass** der Reibkörper die Form einer Scheibe hat, und dass die Langfasern zumindest zum Teil in Umfangsrichtung und/oder parallel zu Sekanten und/oder netzförmig und/oder spiralförmig und/oder sternförmig ausgerichtet sind.

8. Reibkörper nach Anspruch 7, **dadurch gekennzeichnet, dass** die Langfasern als zusammenhängendes Gewebe oder Gestricke mit Aussparungen vorliegen.

9. Verfahren zur Herstellung von Reibkörpern aus mit Fasern verstärkten keramischen Werkstoffen mit Siliciumcarbid-haltigen Matrices, umfassend eine Kern- oder Tragzone und mindestens eine Reibschicht, wobei die Kernzone Verstärkungsfasern in Form von Langfaserbündeln, Geweben, Gewirken, Vliesen oder Gelegen enthält, sowie Verstärkungsfasern in Form von Kurzfasern, und wobei die Reibschicht einen Massenanteil von weniger als 10 % von Langfasern und bis zu 35 % an Kurzfasern enthält, und wobei die Langfasern in der Kernzone zu mindestens 70 % in der Ebene des Reibkörpers orientiert sind, und wobei die Orientierung der Kurzfasern in der Kernzone im wesentlichen isotrop ist, wobei dies bedeutet, dass höchstens 30 % der Fasern eine gemeinsame Vorzugsrichtung aufweisen, und wobei die Langfasern der Kernzone mindestens 50 mm lang, und die Kurzfasern der Kernzone höchstens 30 mm lang sind, umfassend die Schritte
- Herstellung von kohlenstoffhaltigen porösen Grünkörpern, wobei Langfaserbündel und/oder Langfaser-Gewebe und/oder Langfaser-Gestricke zwischen Schichten aus Kurzfaser- bzw. Kurzfaserbündel-haltiger Grünkörper-Mischung in eine Pressform eingelegt werden, und wobei die Grünkörpermischung neben den Kurzfasern oder Kurzfaserbündeln härtbare und carbonisierbare Harze und/oder Peche, sowie gegebenenfalls auch Füllstoffe enthält,
- Verpressen und Aushärten der die Langfasern enthaltenden Grünkörper-Mischung bei erhöhten Temperaturen,
- Carbonisierung bei ca. 750 °C bis ca. 1200 °C oder Graphitierung bei Temperaturen oberhalb von 1800 °C jeweils unter Schutzgas oder im Vakuum zu einem CFC-Körper,
- Infiltration des CFC-Körpers bei Temperaturen oberhalb von 1420 °C mit einer Siliciumschmelze, die auch weitere Metalle oder Halbmetalle in Massenanteilen von bis zu 50 % aufweisen kann, und Umwandeln zumindest eines Teil des Kohlenstoffs durch chemische Reaktion in SiC.

10. Verfahren zum Herstellen von Reibkörpern mit mehreren Zonen nach Anspruch 9, **dadurch gekennzeichnet, dass** der CFC-Körper aus mehreren einzeln hergestellten, den Zonen entsprechenden CFC-Vorkörpern zusammengefügt ist, die erst bei der Flüssiginfiltration mit der Siliciumschmelze unlösbar miteinander verbunden werden, wobei die mittlere. Zone die Kernzone bildet, und die an den Deckflächen befindlichen Zonen die Reibzonen bilden.

11. Verfahren nach einem der vorhergehenden Anspruch, **dadurch gekennzeichnet, dass** die Reibkörper scheibenförmig sind, und dass die Langfasern überwiegend in Umfangsrichtung und/oder parallel zu Sekanten und/oder netzförmig und/oder spiralförmig und/oder sternförmig ausgerichtet sind.

12. Verfahren nach den Ansprüchen 9 bis 11, **dadurch gekennzeichnet, dass** der Massenanteil der Si- und SiC-enthaltenden Matrix in der Reibschicht mindestens 65 % beträgt und dass der Anteil an Verstärkungsfasern in den Reibzonen nicht mehr als 35 % beträgt.

13. Verwendung eines Reibkörpers gemäß Anspruch 1 als Kupplungsscheibe oder als Reibbelag für Kupplungen oder als Reibscheibe für Reibkupplungen oder als Bremsscheibe.

14. Verwendung eines Reibkörpers nach einem der vorangegangenen Ansprüche als Kupplungsscheibe in Kraftfahrzeugen.

## Claims

1. A friction body composed of fiber-reinforced ceramic materials, which comprises a core or support zone and at least one friction layer, wherein the core zone contains reinforcing fibers in the form of long fiber bundles, woven fabrics, knitteds, nonwovens or lay-ups and also reinforcing fibers in the form of short fibers and the friction layer contains a mass fraction of less than 10 % of long fibers and up to 35 % of short fibers, at least 70 % of the long fibers in the core zone are oriented in the plane of the friction body and the orientation of the short fibers in the core zone is essentially isotropic, with this meaning that not more than 30 % of the fibers have a common preferential direction, and the long fibers of the core zone have a length of at least 50 mm and the short fibers of the core zone have a length of not more than 30 mm.

2. The friction body as claimed in claim 1, wherein the core zone is a fiber-reinforced ceramic composite having an Si- and SiC-containing matrix.

3. The friction body as claimed in claim 1, wherein the reinforcing fibers are carbon fibers and/or graphite fibers and/or fibers comprising compounds of at least two of the elements Si, C, B, Ti and N.

4. The friction body as claimed in claim 1, wherein the mass fraction of SiC phases in the friction layer is at least 40 % and the mass fraction of Si phases is not more than 35 %.

5. The friction body as claimed in any of the preceding claims, wherein the friction body has the shape of a disk.

6. The friction body as claimed in any of the preceding claims, wherein the long fibers are collected into bundles, lay-ups, woven fabrics or knitteds having a width of at least 0.5 mm and a thickness of at least 0.05 mm.

7. The friction body as claimed in any of the preceding claims, wherein the friction body has the shape of a disk and the long fibers are at least partly aligned in the circumferential direction and/or parallel to secants and/or in the form of a mesh and/or in the form of a spiral and/or in the form of a star.

8. The friction body as claimed in claim 7, wherein the long fibers are present as a continuous woven fabric or knitted having cut-outs.

9. A process for producing friction bodies composed of fiber-reinforced ceramic materials having silicon carbide-containing matrices, which comprise a core or support zone and at least one friction layer, where the core zone contains reinforcing fibers in the form of long fiber bundles, woven fabrics, knitteds, nonwovens or lay-ups and also reinforcing fibers in the form of short fibers and the friction layer contains a mass fraction of less than 10 % of long fibers and up to 35 % of short fibers and at least 70 % of the long fibers in the core zone are oriented in the plane of the friction body and the orientation of the short fibers in the core zone is essentially isotropic, with this meaning that not more than 30 % of the fibers have a common preferential direction, and the long fibers of the core zone have a length of at least 50 mm and the short fibers of the core zone have a length of not more than 30 mm, which comprises the steps
- production of carbon-containing porous green bodies, where long fiber bundles and/or long fiber woven fabrics and/or long fiber knitteds are laid between layers of a green body mixture containing short fibers or sort fiber bundles in a pressing mold and the green body mixture comprises curable and carbonizable resins and/or pitches and also, if appropriate, fillers in addition to the short fibers and short fiber bundles,
- pressing and curing of the green body mixture containing the long fibers at elevated temperatures,
- carbonization at from about 750 °C to about 1200 °C or graphitization at temperatures above 1800 °C, in each case under protective gas or under reduced pressure, to form a CFC body,
- infiltration of the CFC body at temperatures above 1420 °C with a silicon melt which may also contain further metals or semimetals in mass fractions of up to 50 % and conversion of at least part of the carbon into SiC by chemical reaction.

10. The process for producing friction bodies having a plurality of zones as claimed in claim 9, wherein the CFC body is assembled from a plurality of individually produced CFC intermediate bodies which correspond to the zones and are permanently joined to one another only on infiltration with the silicon melt, with the middle zone forming the core zone and the zones located at the outer surfaces forming the friction zones.

11. The process as claimed in either of the preceding claims, wherein the friction bodies are disk-shaped and the long fibers are predominantly aligned in the circumferential direction and/or parallel to secants and/or in the form of a mesh and/or in the form of a spiral and/or in the form of a star.

12. The process as claimed in any of claims 9 to 11, wherein the mass fraction of the Si- and SiC-containing matrix in the friction layer is at least 65 % and the proportion of reinforcing fibers in the friction zones is not more than 35 %.

13. The use of a friction body as claimed in claim 1 as clutch disk or as friction lining for clutches or as friction disk for friction clutches or as brake disk.

14. The use of a friction body as claimed in any of the preceding claims as clutch disk in motor vehicles.

## Revendications

1. Corps de friction en matériau céramique renforcé par des fibres, comprenant une zone centrale ou de support et au moins une couche de friction, **caractérisé en ce que** la zone centrale contient des fibres de renforcement sous la forme de faisceaux de fibres longues, de tissus, d'étoffes, de tissus non tissés ou de voiles, ainsi que des fibres de renforcement sous forme de fibres courtes, **en ce que** la couche de friction contient une part en poids de moins de 10 % de fibres longues et jusqu'à 35 % de fibres courtes, **en ce que** les fibres longues dans la zone centrale sont orientées à au moins 70 % au niveau du corps de friction, **en ce que** l'orientation des fibres courtes dans la zone centrale est essentiellement isotrope, ce qui signifie que 30 % au plus des fibres présentent la même direction de prédilection, et **en ce que** les fibres longues de la zone centrale sont longues d'au moins 50 mm, et les fibres courtes de la zone centrale sont longues de 30 mm au plus.

2. Corps de friction selon la revendication 1, **caractérisé en ce que** la zone centrale est un matériau composite céramique renforcé par des fibres avec une matrice contenant du Si et du SiC.

3. Corps de friction selon la revendication 1, **caractérisé en ce que** les fibres de renforcement sont des fibres de carbone et/ou des fibres de graphite et/ou des fibres contenant des composés d'au moins deux des éléments Si, C, B, Ti et N.

4. Corps de friction selon la revendication 1, **caractérisé en ce que** la part en poids de phase SiC dans la couche de friction se monte à au moins 40 % et la part en poids de phase Si se monte à 35 % au plus.

5. Corps de friction selon l'une des revendications 1 à 4, **caractérisé en ce que** le corps de friction a la forme d'un disque.

6. Corps de friction selon l'une des revendications 1 à 5, **caractérisé en ce que** les fibres longues sont agrégées en faisceaux, voiles, tissus ou étoffes d'une largeur d'au moins 0,5 mm et d'une épaisseur d'au moins 0,05 mm.

7. Corps de friction selon l'une des revendications 1 à 6, **caractérisé en ce que** le corps de friction a la forme d'un disque, et **en ce que** les fibres longues sont au moins en partie alignées dans la direction d'origine et/ou parallèlement aux sécants et/ou en forme de réseau et/ou en forme de spirale et/ou en forme d'étoile.

8. Corps de friction selon la revendication 7, **caractérisé en ce que** les fibres longues se présentent comme un tissu ou une étoffe connexe avec des orifices.

9. Procédé pour la réalisation de corps de friction en matériau céramique renforcé par des fibres avec des matrices silice de carbone, comprenant une zone centrale ou de support et au moins une couche de friction, la zone centrale contenant des fibres de renforcement sous la forme de faisceaux de fibres longues, de tissus, d'étoffes, de tissus non tissés ou de voiles, ainsi que des fibres de renforcement sous forme de fibres courtes, et la couche de friction contenant une part en poids de moins de 10 % de fibres longues et jusqu'à 35 % de fibres courtes, les fibres longues dans la zone centrale étant orientées à au moins 70 % au niveau du corps de friction, et l'orientation des fibres courtes dans la zone centrale étant essentiellement isotrope, ce qui signifie que 30 % au plus des fibres présentent la même direction de prédilection, les fibres longues de la zone centrale étant longues d'au moins 50 mm, et les fibres courtes de la zone centrale étant longues de 30 mm au plus, comportant les étapes suivantes :
- réalisation de corps crus poreux carbonés, le faisceau de fibres longues et/ou le tissu de fibres longues et/ou l'étoffe de fibres longues étant disposé(e) dans un moule à compression entre des couches de mélange de corps crus contenant des fibres courtes ou des faisceaux de fibres courtes, et le mélange de corps crus contenant en plus des fibres courtes ou des faisceaux de fibres courtes des résines et/ou des poix durcissables et carbonisables, ainsi que dans certains cas également des charges,
- compression et durcissement du mélange de corps crus contenant les fibres longues à des températures élevées,
- carbonisation à environ 750°C jusqu'à environ 1200°C ou graphitisation à des températures de plus de 1800°C, à chaque fois sous gaz inerte ou sous vide, en un corps CFC,
- infiltration du corps CFC à des températures de plus de 1420°C avec une coulée de silice, qui peut aussi comporter d'autres métaux ou métalloïdes en une part en poids allant jusqu'à 50 %, et transformation d'au moins une partie du carbone par réaction chimique dans du SiC.

10. Procédé pour la réalisation de corps de friction avec plusieurs zones selon la revendication 9, **caractérisé en ce que** le corps CFC est assemblé à partir de plusieurs substrats CFC réalisés séparément, correspondant aux différentes zones, qui sont attachés les uns aux autres de manière indissoluble au moyen de l'infiltration liquide avec la coulée de silice, la zone intermédiaire constituant la zone centrale, et les zones se trouvant à la surface constituant les zones de frottement.

11. Procédé selon l'une des revendications 1 à 10, **caractérisé en ce que** le corps de friction est en forme de disque, et que les fibres longues sont majoritairement alignées dans la direction d'origine et/ou parallèlement aux sécants et/ou en forme de réseau et/ou en forme de spirale et/ou en forme d'étoile.

12. Procédé selon les revendications 9 à 11,
**caractérisé en ce que** la part en poids de matrice contenant du Si et SiC se monte à au moins 65 % dans la couche de friction et que la part de fibres de renforcement dans la zone de friction ne dépasse pas 35 %.

13. Utilisation d'un corps de friction selon la revendication 1 comme disque d'accouplement ou comme garniture de friction pour les accouplements ou comme disque de friction pour un embrayage à friction ou comme disque de frein.

14. Utilisation d'un corps de friction selon l'une des revendications précédentes comme disque d'accouplement dans les véhicules à moteur.
